# EUROPEAN PATENT SPECIFICATION

(11) **EP 3 135 498 B1**
(45) Date of publication and mention of the grant of the patent: **03.03.2021**
(21) Application number: 16186088.7
(22) Date of filing: 29.08.2016
(51) Int. Cl.: B60B 15/20, B60C 7/12, B60C 7/16, B60C 7/18

(54) **KAYAK TROLLEY**
KARRE FÜR KAYAK
CHARIOT DE KAYAK

(30) Priority: 31.08.2015 NZ 71163715
(43) Date of publication of application: 01.03.2017
(73) Proprietor: RAILBLAZA LIMITED, Silverdale, Auckland 0932 (NZ)
(72) Inventor: PRATT, Ross Gregory, 0932 Auckland (NZ)
(74) Representative: Gallego Jiménez, José Fernando

(56) References cited:
- EP-A1- 2 305 489
- WO-A1-2014/036415
- US-A1- 2004 159 385
- US-A1- 2006 144 488
- US-A1- 2009 211 675

## Description

### Field of the Invention

A preferred form of the invention relates to a kayak trolley supporting a kayak, the trolley has Z a wheel suitable for use on sandy ground.

### Background

It is known to use hand-towed wheeled trolleys for transporting kayaks or small watercraft across a sandy beach. However, in soft sand the wheels can dig in, and this can make movement difficult. It is accordingly an object of a preferred form of the invention to go at least some way towards addressing this. However, it should be appreciated that the invention has more general application, and so any objects or advantages applicable to the preferred embodiment should not be seen as a limitation on the scope of the claims. The object of the invention per se is simply to provide the public with a useful choice.

Document US 2009/211675 A1 discloses a non-pneumatic wheel assembly.

### Summary of Invention

According to one aspect of the invention there is provided a kayak trolley supporting a kayak, the trolley having a wheel comprising:
a hub;
rigid spokes extending outwards from the hub to a rigid rim;
and a flexible airless tire fitted to the rigid rim;
the tire having a plurality of flexible spokes extending between an inner flexible band and an outer flexible band, the flexible spokes being laid-over and having moved under the load of the kayak to cause a ground engaged section of the tire to assume a substantially flat track portion, such that it will revert to a normal circular tending configuration when turned away from a ground engaging position; and wherein the flat track portion is as long as at least the diameter of the rigid rim; and wherein the flexible spokes are laid over so that a first series of the flexible spokes tend clockwise and a second series of the flexible spokes tend counter-clockwise.

Optionally the tire is in half portions and the flexible spokes of one half extend in an angular disposition opposite to those of the other half.

Optionally the flexible spokes are each in the shape of an arc.

Optionally the tire is formed such that the flat track portion is able, in normal use, to be as long as at least the diameter of the rest of the wheel.

Optionally the tire is formed such that the flat track portion is able, in normal use, to be as long as half of the diameter of the rest of the wheel.

Optionally the tire is formed such that the flat track portion is able, in normal use, to be as long as quarter of the diameter of the rest of the wheel.

Optionally the tire is formed such that the flat track portion is able, in normal use, to be as long as an eighth of the diameter, or a sixteenth of the diameter of the rest of the wheel.

Optionally the trolley is suitable for transporting a watercraft.

### Drawings

Some preferred embodiments of the invention will now be described by way of example and with reference to the accompanying drawings, of which:
- **Figure 1**: is an isometric view of a wheel for a kayak trolley;
- **Figure 2**: is an end view of the wheel;
- **Figure 3**: is a side view of the wheel; and
- **Figure 4**: illustrates the wheel when in use on loose sand.

### Detailed Description

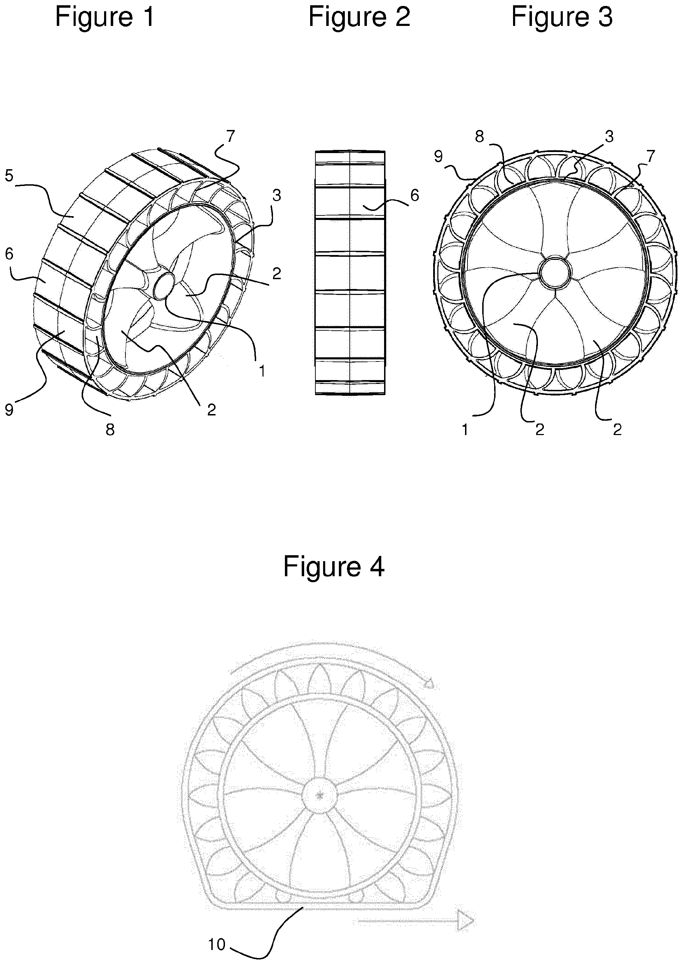

Referring to figures 1, 2 and 3, the wheel has a rigid hub 1 for receiving an axle. A series of rigid spokes 2 extend outwards from the hub to a rigid rim 3. A flexible ground-engaging airless tire 4 is fitted tightly around the rim 3.

As shown in figures 1 and 2, the tire 4 can be conceptually divided into halves 5, 6, one on the left and one on the right. However, they are in reality just different parts of the one piece. Each half 5, 6 has a series of flexible spokes 7 extending between an inner flexible band 8 and an outer flexible band 9. As best shown in figure 3, the spokes 7 are not strictly radial; rather they 'lay over' in one or other of two directions. More specifically, they are arc like between the inner and outer flexible bands 8, 9. The arcs of one half uniformly lean in one direction, and those of the other half do so in the opposite direction.

When two of the wheels are used as part of a kayak trolley they are each fitted to an axle or axles, which in turn connect to a chassis or upper seat. The kayak is loaded onto the seat and is preferably, although not necessarily, tied or clipped down. A human user then pulls or pushes on the kayak to move it and the trolley from say a car or house to the waterline. This saves the user having to drag the kayak across a sandy or other beach, or having to carrying it on one's shoulders or in one's arms. It makes it easier, for example, for one person to transport the kayak as opposed to having two people do it. In some embodiments the trolley may have a long handle which can be pushed or pulled to move the trolley and kayak.

The weight of some kayaks or watercraft is significant, and so with many known trolleys the wheels readily dig in as they are transported across a soft sandy beach. At times this can make moving the kayak almost as difficult as simply picking it up and carrying it. However, the wheel of the preferred embodiment is specifically designed to address this. Referring to figure 4, when a load comes on the wheel in soft sand, its ground-contacting region automatically flattens to become track-like 10. This spreads the load across a larger area of sand and stops, or at least reduces, the tendency of the wheel to 'dig-in'.

According to the present invention the wheel is such that it is capable of forming the track-like region 10 to be at least as long as the diameter of the rigid rim 3, while maintaining space between the inner and outer flexible bands 8, 9. Due to the resilience or 'spring-back' of the flexible spokes, as the tire turns the part of it that was in contact with the ground ceases to be flat track-like; that is until it comes back around to a ground engaging position.

In one example, the wheel has a diameter of 315mm. When under load the wheel forms a flat track portion against the ground of approximately 160mm.

The wheel can be formed on any suitable materials and in any suitable dimensions to match its intended end-use. For example, the tire may be formed of rubber and the rigid inner spokes formed from a hard plastic. Somewhat less flexible materials may be used for the tire in cases where the wheel is intended for use with heavier craft, such as large touring kayaks or dinghies. The same wheel concept may be used for other transporters, for example with wheelbarrows or powered vehicles, etc.

In preferred embodiments of the invention the tire is a permanent part of the wheel, i.e. it cannot be removed without destructive force. However, in other embodiments it may be readily replaceable.

While some preferred embodiments have been described by way of example it should be appreciated that modifications and improvements can be made without departing from the scope of the invention, which is defined by the appended claims.

## Claims

1. A kayak trolley supporting a kayak, the trolley having a wheel comprising:
• a hub (1);
• rigid spokes (2) extending outwards from the hub (1) to a rigid rim (3); and
• a flexible airless tire (4) fitted to the rigid rim (3); the tire having a plurality of flexible spokes (7) extending between an inner flexible band (8) and an outer flexible band (9), the flexible spokes (7) being laid-over and having moved under the load of the kayak to cause a ground engaged section of the tire to assume a substantially flat track portion (10), such that it will revert to a normal circular tending configuration when turned away from a ground engaging position;
wherein the flat track portion (10) is as long as at least the diameter of the rigid rim; and wherein the flexible spokes (7) are laid over so that a first series of the flexible spokes tend clockwise and a second series of the flexible spokes tend counter-clockwise.

2. A kayak trolley according to claim 1, wherein the tire is in half portions and the flexible spokes of one half extend in an angular disposition opposite to those of the other half.

3. A kayak trolley according to claim 1 or 2 wherein the flexible spokes (7) are each in the shape of an arc.

## Patentansprüche

1. Kajakwagen, der ein Kajak trägt, wobei der Wagen ein Rad aufweist, umfassend:
• eine Nabe (1);
• starre Speichen (2), die sich von der Nabe (1) zu einer starren Felge (3) nach außen erstrecken; und
• einen flexiblen luftlosen Reifen (4), der an der starren Felge (3) angebracht ist;
wobei der Reifen eine Vielzahl von flexiblen Speichen (7) aufweist, die sich zwischen einem inneren flexiblen Band (8) und einem äußeren flexiblen Band (9) erstrecken, wobei die flexiblen Speichen (7) überlagert sind und sich unter der Last des Kajaks bewegt haben, um zu bewirken, dass ein Bodeneingriffsabschnitt des Reifens einen im Wesentlichen flachen Spurabschnitt (10) annimmt, so dass er zu einer normalen kreisförmigen Neigungskonfiguration zurückkehrt, wenn er von einer Bodeneingriffsposition abgewandt wird;
wobei der flache Spurabschnitt (10) mindestens so lang ist wie der Durchmesser der starren Felge; und wobei die flexiblen Speichen (7) so überlagert sind, dass sich eine erste Reihe der flexiblen Speichen im Uhrzeigersinn und eine zweite Reihe der flexiblen Speichen gegen den Uhrzeigersinn neigt.

2. Kajakwagen nach Anspruch 1, wobei der Reifen in halben Abschnitten vorliegt und sich die flexiblen Speichen einer Hälfte in einer Winkelanordnung erstrecken, die denen der anderen Hälfte entgegengesetzt ist.

3. Kajakwagen nach Anspruch 1 oder 2, wobei die flexiblen Speichen (7) jeweils die Form eines Bogens aufweisen.

## Revendications

1. Chariot à kayak supportant un kayak, le chariot ayant une roue comprenant :
• un moyeu (1) ;
• des rayons rigides (2) s'étendant vers l'extérieur du moyeu (1) à une jante rigide (3) ; et
• un pneu souple sans air (4) monté sur la jante rigide (3) ;
le pneu ayant une pluralité de rayons souples (7) s'étendant entre une bande souple interne (8) et une bande souple externe (9), les rayons souples (7) étant posés et s'étant déplacés sous la charge du kayak pour amener une section en prise avec le sol du pneu à prendre une partie de voie sensiblement plate (10), de sorte à revenir à une configuration à tendance circulaire normale lorsqu'elle est détournée d'une position en prise avec le sol ;
dans lequel la partie de voie plate (10) est aussi longue qu'au moins le diamètre de la jante rigide ; et dans lequel les rayons souples (7) sont posés de sorte qu'un premier ensemble de rayons souples tendent dans le sens des aiguilles d'une montre et un deuxième ensemble de rayons souples tendent dans le sens inverse des aiguilles d'une montre.

2. Chariot à kayak selon la revendication 1, dans lequel le pneu a des demi-parties et les rayons souples d'une moitié s'étendent dans une disposition angulaire opposée à ceux de l'autre moitié.

3. Chariot à kayak selon la revendication 1 ou 2, dans lequel les rayons souples (7) ont chacun la forme d'un arc.
